(19) Europäisches Patentamt European Patent Office Office européen des brevets

(11) **EP 3 340 810 B1**

## (12) EUROPEAN PATENT SPECIFICATION

(45) Date of publication and mention of the grant of the patent:
**16.12.2020 Bulletin 2020/51**

(21) Application number: **16757260.1**

(22) Date of filing: **26.08.2016**

(51) Int Cl.:
*A23L 33/00* (2016.01)     *A23L 33/115* (2016.01)

(86) International application number:
**PCT/EP2016/070214**

(87) International publication number:
**WO 2017/032885 (02.03.2017 Gazette 2017/09)**

(54) **SYNTHETIC NUTRITIONAL COMPOSITIONS TAILORED FOR INFANTS OF SPECIFIC AGES, AND NUTRITIONAL SYSTEMS COMPRISING THEM**

SYNTHETISCHE, AUF KINDER IN SPEZIFISCHEM ALTER ZUGESCHNITTENE NÄHRSTOFFSZUSAMMENSETZUNGEN UND NÄHRSTOFFSYSTEME DIESE ENTHALTEND

COMPOSITIONS NUTRITIONNELLES SYNTHÉTIQUES ADAPTÉES À DES ENFANTS D'ÂGES SPÉCIFIQUES ET SYSTÈMES ALIMENTAIRES COMPRENANT CELLES-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.08.2015 EP 15182768**

(43) Date of publication of application:
**04.07.2018 Bulletin 2018/27**

(73) Proprietor: **Société des Produits Nestlé S.A.**
**1800 Vevey (CH)**

(72) Inventors:
• **THAKKAR, Sagar**
  **1817 Brent (CH)**
• **GIUFFRIDA, Francesca**
  **1083 Mezieres (CH)**
• **DE CASTRO, Carlos Antonio**
  **1203 Geneva (CH)**
• **DESTAILLATS, Frederic**
  **1077 Servion (CH)**

(74) Representative: **Corticchiato, Olivier et al**
**Société des Produits Nestlé S.A.**
**Avenue Nestlé 55**
**1800 Vevey (CH)**

(56) References cited:
WO-A1-2011/135564     WO-A1-2013/036102
WO-A2-2013/153071     US-A1- 2004 265 462

• HURGOIU V ET AL: "LA DYNAMIQUE DE LA COMPOSITION DES LIPIDES DU LAIT HUMAIN AU COURS DE LA LACTATION - [DYNAMIC OF LIPID CONTENT IN HUMAN MILK DURING LACTATION]", PEDIATRIE, PEDIATRIE, LYON, FR, vol. 40, no. 3, 1 January 1985 (1985-01-01), pages 201-205, XP008178886, ISSN: 0031-4021
• ANNA M KAMELSKA ET AL: "Variation of the cholesterol content in breast milk during 10 days collection at early stages of lactation", ACTA BIOCHIMICA POLONICA, vol. 59, no. 2, 27 April 2012 (2012-04-27) , pages 243-247, XP055248803, PL ISSN: 0001-527X
• BOERSMA E R ET AL: "VITAMIN E, LIPID FRACTIONS, AND FATTY ACID COMPOSITION OF COLOSTRUM, TRANSITIONAL MILK, AND MATURE MILK: AN INTERNATIONAL COMPARATIVE STUDY", THE AMERICAN JOURNAL OF CLINICAL NUTRITION, AMERICAN SOCIETY FOR NUTRITION, US, vol. 53, no. 5, 1 January 1991 (1991-01-01), pages 1197-1204, XP008071461, ISSN: 0002-9165

## Description

**Technical field:** The invention relates to nutritional systems comprising synthetic nutritional compositions tailored for infants of specific ages and to their use to provide an optimised amount of cholesterol and/or one or more health benefit to an infant.

## Background of the invention

Even though breastfeeding is optimal for infants, the existence of certain conditions may mean that it is contraindicated (AAP, 2012; Lawrence, 2013). In such cases, where the sole source of nutrition is not available to infants, alternative strategies to feed them have to be devised. Feeding infants with synthetic nutritional compositions e.g. Infant formula is one such strategy.

The compositions of the aforementioned synthetic nutritional compositions e.g. infant formulas, aim to replicate those of human milk (hereinafter HM). However, replicating HM is not a simple task. HM not only contains numerous components, its composition is extremely dynamic and these dynamic changes remain largely unexplored and uncharacterized.

Document WO2013/036102 relates to infant nutrition comprising lipid globules with a coating of phospholipids comprising dietary cholesterol. The infant nutrition has programming effects on the body and results in reduced levels of total blood cholesterol later in life when consuming a western diet.

Document WO2013/153071 concerns the field of nutritional compositions and concerns a nutritional composition, use of a nutritional composition and a production method thereof. A nutritional composition according to the present invention has a total energy content of 67 kcal/100 ml or lower and the composition comprises; -a protein content which is 1.25 g/100 ml or lower, -an energy content from protein of 7.-23-8.4 percent of the total energy content of the nutritional composition, -an energy content from fat which is at least 49 percent or more of the total energy content of the nutritional composition, - a medium chain fatty acid content comprising 8 to 10 carbons which is less than 3 weight % of total amount of fatty acids, -a sialic acid content of 10-25 mg/ 100 ml or higher, -a cholesterol content of 5-10 mg/100 ml - a sphingomyelin content of 9-15 mg/ 100 ml or higher.

Document US2004/265462 relates to a nutritional supplement comprising an infant milk formula having long chain poly unsaturated fatty acids, sialic acids, and cholesterol.

Document WO2011/135564 discloses a method of inducing and promoting development of beneficial gut flora in a subject and/or of reducing the frequency and duration of crying periods in a subject, the method comprises administering to the subject a lipid composition comprising a vegetable-derived fat source, wherein the fat source is a triglyceride fat source comprising triglycerides with 15-55% palmitic acid moieties out of the total fatty acids, and wherein the level of palmitic acid moieties at the sn-2 position of the glycerol backbone is at least 30% of total palmitic acid. The method is particularly intended for children. Specific fat sources, as well as food articles and a commercial package comprising the same are disclosed.

The inventors have now identified the concentration ranges of cholesterol that may be found in HM depending on lactation stage, and have found that the concentration of cholesterol in HM may differ depending on the lactation stage. These findings, in particular these lactation stage differences, are not reflected in the compositions of synthetic nutritional compositions available for infants today. Given that HM is considered the gold standard with respect to infant nutrition, there remains a need for synthetic nutritional compositions tailored for infants of specific ages and of nutritional systems comprising them which better reflect these identified differences.

## Summary of the invention

The invention is set out in the claims. The inventors have developed synthetic nutritional compositions tailored for infants of specific ages comprising cholesterol in concentrations that reflect the concentration of cholesterol found in HM produced for an infant of the same age e.g. at the same lactations stage.

Said synthetic nutritional compositions are infant formula.

The synthetic nutritional compositions tailored for infants of specific ages are included in a nutritional system. The cholesterol concentration of said synthetic nutritional compositions tailored for infants of specific ages may differ. The cholesterol concentration is higher in a synthetic nutritional compositions tailored for infants of 0 up to 2 months of age than in a synthetic nutritional compositions tailored for infants from 2 months of age.

The cholesterol concentrations of the synthetic nutritional compositions comprised in the nutritional systems of the present invention more accurately reflect the cholesterol concentrations found in HM produced for infants of the same ages i.e at the same stage of lactation. In light of this and, because HM is considered optimal with respect to infant nutrition, they can provide an optimized amount of cholesterol to an infant, and may be used to ensure optimum cholesterol levels in infants both short term and long term. Accordingly, said compositions may provide protection against non-optimal cognitive development and/or hypercholesterolemia and a condition associated therewith e.g. hyperlipidemia related cardio-cerebro-vascular diseases including coronary heart disease, angina, myocardial infarction, atherosclerosis, coronary artery disease, stroke, claudication, peripheral vascular disease, non-alcohol fatty liver disease, metabolic diseases such as type II diabetes and combinations thereof. Said protection may be long term protection.

The synthetic nutritional compositions of the invention may be prepared from a non-age tailored synthetic nutritional composition by measuring out an appropriate amount of said non-age tailored synthetic nutritional composition and mixing it with an additive and/or diluent e.g. cholesterol and/or water.

### Detailed Description

The inventors performed a longitudinal study evaluating the nutrient composition of HM collected from mothers at various stages of lactation (30 days (1 month), 60 days (2months), and 120 days (4 months) postpartum). From the results of this study the inventors have identified the concentration ranges of cholesterol found in HM depending on lactation stage. The inventors also found that the results of this study indicate that the concentration of cholesterol found in HM can differ depending on the stage of lactation. In particular the inventors found that the study indicated that the concentration of cholesterol in HM may differ up to 2 months postpartum and from 2 months postpartum. More particularly the inventors found that the results of the study indicated that the concentration of cholesterol in HM produced up to 2 months postpartum may be higher than the concentration of cholesterol in HM produced from 2 months postpartum, in particular 2 months up to 4 months postpartum and from 4 months postpartum. The study further indicated, and that the concentration of cholesterol in HM produced from 4 months postpartum may be higher than the concentration of cholesterol in HM produced from 2 months to 4 months postpartum.

Based on the findings of the study, the inventors have designed synthetic nutritional compositions tailored for infants of specific ages wherein, the cholesterol concentration reflects that found in HM produced for an infant of the same age (corresponding lactation stage).

The term "synthetic nutritional composition tailored for an infant of a specific age" as used herein refers to any synthetic nutritional composition that is intended to be consumed by an infant of a specific age and that is specifically adapted to the nutritional needs of an infant of said specific age.

Synthetic nutritional compositions tailored for an infant from 0 up to 4 months of age include are infant formulae. Synthetic nutritional compositions tailored for an infant of 4 months up to 12 months of age are infant formulae.

The term "infant" as used herein refers to a human infant of 12 months of age or less.

There is provided a synthetic nutritional composition comprised in the nutritional systems according to the present invention tailored for an infant of a specific age selected from the group consisting of; up to 2 months of age, from 2 months of age, in particularly 2 months up to 4 months of age and from 4 months of age, wherein, the cholesterol concentration in said age tailored synthetic nutritional composition mimics that found in human milk produced for an infant of the same age.

Non limiting examples of an age of up to 2 months of age include; up to 2 weeks of age, up to 1 month of age, 2 weeks to 1 month of age, up to 2 months of age, 1 month up to 2 months of age.

Non limiting examples of an age from 2 months of age include; 2 months up to 3 months of age, 3 months up to 4 months of age, 3 months of age, 2 months of age; 4, 5, 6, 7, 8, 9, 10, 11 and 12 months of age, 4 up to 6 months of age, 6 months to 9 months of age, 6 months to 12 months of age.

Non limiting examples of an age from 2 months up to 4 months of age include; 2 months up to 3 months of age, 3 months up to 4 months of age, 3 months of age, 2 months of age.

Non limiting examples of an age from 4 months of age include; 4, 5, 6, 7, 8, 9, 10, 11 and 12 months of age, 4 up to 6 months of age, 6 months to 9 months of age, 6 months to 12 months of age.

The synthetic nutritional composition comprised in the nutritional system of the present invention is tailored for an infant of up to 2 months of age and comprises cholesterol in a concentration selected from the group consisting of 30.34 to 100.19, 43 to 78, 60 to 60.5, or 60.48 $\mu$g/ml.

The synthetic nutritional composition comprised in the nutritional system of the present invention is tailored for an infant of from 2 months of age and comprises cholesterol in a concentration selected from the group consisting of 14 to 114, 26 to 69, 47 to 47.7, or 47.16 $\mu$g/ml.

In particular the synthetic nutritional composition comprised in the nutritional system of the present invention is tailored for an infant of from 2 months up to 4 months of age and comprises cholesterol in a concentration selected from the group consisting of 14 to 114, 26 to 69, 47 to 47.5, or 47.16 $\mu$g/ml, or is tailored for an infant of from 4 months of age and comprises cholesterol in a concentration selected from the group consisting of 22 to 101, 29 to 67, 47 to 48, or 47.62 $\mu$g/ml.

The cholesterol concentration of the synthetic nutritional compositions comprised in the nutritional system of the present invention is tailored for an infant of a specific age as defined herein is expressed in $\mu$g/ml. This may refer to the cholesterol concentration of a reconstituted synthetic nutritional compositions tailored for an infant of a specific age.

The term cholesterol as used herein refers to cholesterol and cholesteryl esters The cholesterol concentration of a composition can be measured by methods well known in the art. In particular the cholesterol concentration can be measured using a fluorometric method, in particular by employing an Amplex® Red Cholesterol Assay Kit which provides a simple fluorometric method for the sensitive quantitation of cholesterol using a fluorescence microplate reader or fluorometer. The assay is based on an enzyme-coupled reaction that detects both free cholesterol and cholesteryl esters. Cholesteryl esters are hydrolyzed by cholesterol esterase into cholesterol, which is then oxidized by cholesterol oxidase to yield H2O2 and the corresponding ketone product. The H2O2 is then detected using 10-acetyl-3,7-dihydroxyphenoxazine (Amplex® Red reagent), a highly sensitive and stable probe for H2O2.

Any source of cholesterol suitable for administration to an infant to whom the synthetic nutritional composition tailored for an infant of a specific age is directed may be comprised within in the synthetic nutritional compositions tailored for infants of a specific age.

The cholesterol and cholesteryl esters comprised in the synthetic nutritional composition tailored for an infant of a specific age may be synthetic or natural. In particular they may stem from natural sources, more particularly animal sources such as bovine milk, goat milk, sheep milk, camel milk, and/or eggs.

The synthetic nutritional compositions comprised in the nutritional system of the present invention and tailored for an infant of a specific age can also comprise any other ingredients or excipients known to be employed in the type of synthetic nutritional composition in question e.g. infant formula.

Non limiting examples of such ingredients include: proteins, amino acids, carbohydrates, oligosaccharides, lipids, prebiotics or probiotics, essential fatty acids, nucleotides, nucleosides, vitamins, minerals and other micronutrients.

Non limiting examples of proteins include: casein, alpha-lactalbumin, whey, soy protein, rice protein, corn protein, oat protein, barley protein, wheat protein, rye protein, pea protein, egg protein, sunflower seed protein, potato protein, fish protein, meat protein, lactoferrin, serum albumin, immunoglobins, and combinations thereof.

Non limiting examples of amino acids include leucine, threonine, tyrosine, Isoleucine, arginine, alanine, histidine, isoleucine, proline, valine, cysteine, glutamine, glutamic acid, glycine, serine, arginine, lysine, methionine, phenylalanine, tryptophane, asparagine, aspartic acid, and combinations thereof.

Non limiting examples of carbohydrates include lactose, saccharose, maltodexirin, starch, and combinations thereof.

Non limiting examples of lipids include: palm olein, high oleic sunflower oil, high oleic safflower oil, canola oil, fish oil, coconut oil, bovine milk fat, and combinations thereof.

Non limiting examples of essential fatty acids include: linoleic acid (LA), α-linolenic acid (ALA) and polyunsaturated fatty acids (PUFAs). The nutritional compositions of the invention may further contain gangliosides monosialoganglioside-3 (GM3) and disialogangliosides 3 (GD3), phospholipids such as sphingomyelin, phospholipids phosphatidylcholine, phosphatidylethanolamine, phosphatidylinositol, phosphatidylserine, and combinations thereof.

None limiting examples of prebiotics include: oligosaccharides optionally containing fructose, galactose, mannose; dietary fibers, in particular soluble fibers, soy fibers; inulin; and combinations thereof. Preferred prebiotics are fructo-oligosaccharides (FOS), galacto-oligosaccharides (GOS), isomalto-oligosaccharides (IMO), xylo-oligosaccharides (XOS), arabino-xylo oligosaccharides (AXOS), mannan-oligosaccharides (MOS), oligosaccharides of soy, glycosylsucrose (GS), lactosucrose (LS), lactulose (LA), palatinose-oligosaccharides (PAO), maltooligosaccharides, gums and/or hydrolysates thereof, pectins and/or hydrolysates thereof, and combinations of the foregoing.

Further examples of oligosaccharide are described in Wrodnigg, T. M.; Stutz, A.E. (1999) Angew. Chem. Int. Ed. 38:827-828 and in WO 2012/069416 which is incorporated herein by reference.

Non limiting examples of probiotics include: *Bifidobacterium, Lactobacillus, Lactococcus, Enterococcus, Streptococcus, Kluyveromyces, Saccharoymces, Candida,* in particular selected from the group consisting of *Bifidobacterium longum, Bifidobacterium lactis, Bifidobacterium animalis, Bifidobacterium breve, Bifidobacterium infantis, Bifidobacterium adolescentis, Lactobacillus acidophilus, Lactobacillus casei, Lactobacillus paracasei, Lactobacillus salivarius, Lactobacillus lactis, Lactobacillus rhamnosus, Lactobacillus johnsonii, Lactobacillus plantarum, Lactobacillus salivarius, Lactococcus lactis, Enterococcus faecium, Saccharomyces cerevisiae, Saccharomyces boulardii* or mixtures thereof, preferably selected from the group consisting of *Bifidobacterium longum* NCC3001 (ATCC BAA-999), *Bifidobacterium longum* NCC2705 (CNCM I-2618), *Bifidobacterium longum* NCC490 (CNCM I-2170), *Bifidobacterium lactis* NCC2818 (CNCM 1-3446), *Bifidobacterium breve* strain A, *Lactobacillus paracasei* NCC2461 (CNCM I-2116), *Lactobacillus johnsonii* NCC533 (CNCM I-1225), *Lactobacillus rhamnosus GG* (ATCC53103), *Lactobacillus rhamnosus* NCC4007 (CGMCC 1.3724), *Enterococcus faecium SF 68* (NCC2768; NCIMB10415), and combinations thereof.

Non limiting examples of Nucleotides include: cytidine monophosphate (CMP), uridine monophosphate (UMP), adenosine monophosphate (AMP), guanosine monophosphate (GMP), and combinations thereof.

Non limiting examples of vitamins and minerals include: vitamin A, vitamin B1, vitamin B2, vitamin B6, vitamin Bi2, vitamin E. vitamin K. vitamin C, vitamin D, folic acid, inositol, niacin, biotin, pantothenic acid, choline, calcium, phosphorous, iodine, iron, magnesium, copper, zinc, manganese, chloride, potassium, sodium, selenium, chromium, molybdenum, taurine, L-carnitine, and combinations thereof. Minerals are usually added in salt form.

Other suitable and desirable ingredients of synthetic nutritional compositions, that may be employed in the synthetic nutritional compositions tailored for infants of specific ages, are described in guidelines issued by the Codex Alimentarius with respect to the type of synthetic nutritional composition in question e.g. Infant formula, HM fortifier, follow on formula, or food stuffs intended for consumption by infants e.g. complementary foods.

The synthetic nutritional compositions comprised in the nutritional system of the present invention and tailored for infants of specific ages may be prepared by methods well known in the art for preparing the type of synthetic nutritional composition in question e.g. infant formulae.

An exemplary method for preparing an age tailored powdered infant formula is as follows. A protein source, carbohydrate source, and fat source may be blended together in appropriate proportions. Cholesterol may be added or may be inherently comprised within a protein, carbohydrate and/or fat source. Emulsifiers maybe included in the blend. Vitamins and minerals may be added at this point but are usually added later to avoid thermal degradation. Any lipophilic vitamins, emulsifiers and the like may be dissolved into the fat source prior to blending. Water, preferably water which has been subjected to reverse osmosis, may then be mixed in to form a liquid mixture.

The liquid mixture may then be thermally treated to reduce bacterial loads. For example, the liquid mixture may be rapidly heated to a temperature in the range of about 80°C to about 110°C for about 5 seconds to about 5 minutes. This may be carried out by steam injection or by heat exchanger; for example a plate heat exchanger.

The liquid mixture may then be cooled to about 60°C to about 85°C; for example by flash cooling. The liquid mixture may then be homogenised; for example in two stages at about 7 MPa to about 40 MPa in the first stage and about 2 MPa to about 14 MPa in the second stage. The homogenised mixture may then be further cooled to add any heat sensitive components such as vitamins and minerals. The pH and solids content of the homogenised mixture is conveniently standardised at this point.

The homogenised mixture can be transferred to a suitable drying apparatus such as a spray drier or freeze drier and converted to powder. The powder should have a moisture content of less than about 3% by weight.

If it is desired probiotic(s) can be added, they may be cultured according to any suitable method and prepared for addition to the infant formula by freeze-drying or spray-drying for example. Alternatively, bacterial preparations can be bought from specialist suppliers such as Christian Hansen and Morinaga already prepared in a suitable form for addition to food products such as infant formula. Such bacterial preparations may be added to the age tailored powdered infant formula by dry mixing.

The synthetic nutritional compositions comprised in the nutritional system of the present invention and tailored for an infant of a specific age may also be prepared from a non-age tailored synthetic nutritional composition in a method comprising; measuring out an appropriate amount of said non-age tailored synthetic nutritional composition and mixing it with an additive and/or a diluent e.g. water so as to arrive at a synthetic nutritional composition tailored to an infant of a specific age in accordance with the invention.

The additive may be an age tailored additive comprising cholesterol in a particular concentration so that when mixed with the non-age specific synthetic nutritional composition, and optionally a diluent, the resulting mixture is a synthetic nutritional composition tailored to an infant of a specific age in accordance with the invention.

The non-age specific synthetic nutritional composition can be prepared by methods well known in the art for the type of composition in question e.g. as laid out above for infant formula.

One or more of the synthetic nutritional compositions tailored for an infant of a specific age are included in a nutritional system.

The term "nutritional system" as used herein refers to a collection of more than one synthetic nutritional composition advertised or sold as part of the same product range e.g. a collection of infant formulas sold under the same brand and adapted to the nutritional needs of infants of differing ages and/or genders and/or delivered by different methods e.g. C-section. The synthetic nutritional compositions making up the nutritional system may be packaged individually e.g. in capsules or boxes. Said packages can be sold individually, grouped together e.g. wrapped by plastic film or combined in a box, or in a combination of these two ways. The nutritional system may also comprise synthetic nutritional compositions for children older than 12months.

In one aspect of the present invention there is provided a nutritional system comprising a synthetic nutritional composition tailored for an infant of a specific age which comprises a synthetic nutritional composition tailored for an infant of up to 2 months of age and a synthetic nutritional composition tailored for an infant from 2 months of age wherein, the cholesterol concentration of said synthetic nutritional composition tailored for an infant of up to 2 months of age is higher than that of said synthetic nutritional composition tailored for an infant from 2 months of age and comprises 12 to 47 $\mu$g/ml more cholesterol than the synthetic nutritional compositions tailored for an infant from 2 months of age.

The synthetic nutritional composition tailored for an infant from 2 months of age may for example be a synthetic nutritional composition tailored for an infant from 2 months up to 4 months of age or from 4 months of age.

Non limiting examples of ages up to 2 months of age include; up to 2 weeks, up to 1 month, 1 month, and 1 month up to 2 months of age.

Non limiting examples of ages 2 months up to 4 months include; 2 months, 2 months up to 3 months, 3 months, 3 months up to 4 months.

Non limiting examples of an age from 4 months of age include; 4, 5, 6, 7, 8, 9, 10, 11, and 12 months of age, 4 to 6 months of age, 4 to 12 months of age, 6 to 12 months of age, 6 to 9 months of age, and 9 to 12 months of age.

Statistical analysis of the results of the longitudinal study described herein indicated that the differences in the cholesterol concentration of HM found between up to 2 months postpartum and from 2 months postpartum may be significant, but that differences in the cholesterol concentration of HM found between 2 months up to 4 months postpartum and from 4 months postpartum may not be significant.

Accordingly, the nutritional system of the invention comprise more than one synthetic nutritional composition for infants from 2 months of age e.g. one for an infant from 3 months up to 4 months of age and one for an infant from 4 months of age, the cholesterol concentration may not vary in said synthetic nutritional compositions.

Synthetic nutritional compositions comprised in the nutritional system of the present invention and tailored for an infant of a specific age according to the invention are particularly suitable for use in a method of preparing single servings of infant formula using capsules, each capsule of which contains a unit dose of a synthetic nutritional composition e.g. an age tailored synthetic nutritional composition in a concentrated form, and which is equipped with opening means contained within the capsule to permit draining of the reconstituted synthetic nutritional composition directly from the capsule into a receiving vessel such as a baby bottle. Such a method is described in WO2006/077259.

The different synthetic nutritional compositions, including synthetic nutritional compositions tailored for an infant of a specific age may be packed into individual capsules and presented to the consumer in multipacks containing a sufficient number of capsules to meet the requirements of an infant of a particular age or age range, for one week for example. Suitable capsule constructions are disclosed in WO2003/059778.

The capsules can contain the synthetic nutritional compositions tailored for an infant of a specific age in the form of powders or concentrated liquids in both cases for reconstitution by an appropriate amount of water. The synthetic nutritional compositions comprised in the nutritional system of the present invention and tailored for an infant of a specific ages and/or the quantity of a synthetic nutritional compositions e.g. infant formula in the capsules may vary according to age of the infant. If necessary, different sizes of capsules may be provided for the preparation of infant formulas for infants of different ages.

Because HM is the gold standard when it comes to infant nutrition, and because the cholesterol concentration of the synthetic nutritional compositions comprised in the nutritional system of the present invention better reflect the cholesterol concentration found in HM at the corresponding lactation stage, the nutritional systems comprising them, may be used to provide an optimum amount of cholesterol to an infant and thereby to ensure optimum cholesterol levels and to prevent conditions associated with non-optimal cholesterol levels e.g. hypercholesterolemia, and conditions associated therewith and/or non-optimal cognitive development e.g. non optimal verbal fluency, attention/concentration, abstract reasoning.

Since it has been observed that adults who were exclusively breastfed have lower blood cholesterol concentrations than those who were not (see for example; AM J ClinNutr-2008-Owen-305-14 and Pediatrics-2005-Demmers-1594-601), the synthetic nutritional compositions comprised in the nutritional system of the present invention and tailored for an infant of a specific age of the invention may not only ensure optimum cholesterol levels in the short term but may also do so in the long term.

Long term effects may only be evident in months or years e.g. 6 months, 9 months, 12 months, 5 years, 10 years, or 20 years.

There is provided a nutritional system as disclosed herein, for use to prevent hypercholesterolemia and a condition associated therewith.

Non limiting examples of conditions associated with hypercholesterolemia include: hyperlipidemia related cardio-cerebro-vascular diseases including coronary heart disease, angina, myocardial infarction, atherosclerosis, coronary artery disease, stroke, claudication, peripheral vascular disease, non-alcohol fatty liver disease, metabolic diseases such as type II diabetes and combinations thereof.

The synthetic nutritional compositions comprised in the nutritional system of the present invention may provide an optimum amount of cholesterol to an infant. In particular to an infant 0 up to 2 months of age, or an infant from 2 months of age .

The nutritional system may provide an optimum amount of cholesterol to an infant up to 12, 11, 10, 9, 8, 7, 6, 5, 4, 3, 2, 1 months of age and/or up to 2 weeks of age.

### Examples

**Example 1:**

Longitudinal clinical trial:

The present inventors designed a longitudinal clinical trial with 50 lactating mothers with milk sampling at 30 (visit 1), 60 (visit 2) and 120 (visit 3) days post-partum. The milk samples were quantitatively analyzed for cholesterol.

Human milk collection: The protocol and collection of human milk was reviewed and approved by the local ethical committee of Singapore. The study took place at National University of Singapore. Volunteer mothers of term infants, who were apparently healthy and non-smokers (n = 50; 31.1 $\pm$ 3.1-year old) provided breast milk samples (approximately 30 mL; 4 weeks post-partum). Samples were collected after full expression from one breast using milk pump and while the baby was fed on the other breast. All efforts were made to collect complete feed that included fore-milk, mid-milk and hind-milk as a representation of one feed to avoid within feed variation of lipid content. Approximately 30 mL aliquot was separated in a conical polypropylene tube for this study and the rest was fed to the infant. Samples collected for research were stored at -80°C until analyses.

**Measurement of the cholesterol concentrations in samples:** The cholesterol concentration of each sample was measured using an Amplex® Red Cholesterol Assay Kit which was employed according to the manufacturer's instructions.

**Preparation of 20mM Amplex Red reagent stock solution**

The content of the vial of the Amplex Red reagent (1mg, component A) was dissolved in 0.2ml of dimethyl sulfoxide (hereinafter DSMO) (component B). This stock solution was stored at - 20°C and protected from light.

**Preparation of 1 X Reaction Buffer Working Solution**

2.5ml of 5X Reaction buffer stock solution (component E) was added to 10ml of $dH_2O$.

**Preparation of 200U/ml horseradich peroxidase (hereinafter HRP) stock solution**

The contents of the HRP vial (component C) was dissolved in 1ml of 1 X reaction buffer. The solution was freshly prepared.

**Preparation of 20mM $H_2O_2$ working solution**

23$\mu$l 3% $H_2O_2$ stock solution (component D) was diluted into the appropriate 977 $\mu$l of $dH_2O$.

**Preparation of 200U/ml cholesterol oxidase stock solution**

The entire vial of cholesterol oxidase (component F) was dissolved in 0.25ml of 1 X reaction buffer. The solution was freshly prepared.

**Preparation of 200U/ml cholesterol esterase stock solution**

The entire vial of cholesterol esterase (component G) was dissolved in 0.25ml of 1 X reaction buffer. The solution was freshly prepared.

**Preparation of 2mM resorufin stock solution**

1ml of $dH_2O$ was added directly to the vial of resorufin (component G). This stock solution was stored at -20°C and protected from light.

**Preparation of HM samples**

2$\mu$l of each HM sample was diluted with 300$\mu$l of reaction buffer (1:150 HM to reaction buffer)

**Experimental Protocol:**

A cholesterol standard curve was prepared from 0.2M working solution (for 400μl dilute 15.5ml of 5.17mM stock solution in 385.51μl 1 X reaction buffer) according to the table below:

Table I

| Tube | 200 μM chol Standard | 1 X Reaction Buffer | Final concentration (μM cholesterol) |
|---|---|---|---|
| 1 | 0 | 1000 | 0 |
| 2 | 5 | 495 | 2 |
| 3 | 10 | 490 | 4 |
| 4 | 15 | 485 | 6 |
| 5 | 20 | 480 | 8 |
| 6 | 30 | 470 | 12 |
| 7 | 40 | 460 | 16 |
| 8 | 50 | 450 | 20 |

The negative control is the first point of the standard curve (reaction buffer without cholesterol). 50 μl of each point of the standard curve is pipetted into a microplate in duplicate.

50 μl of the prepared HM samples (HM diluted with reaction buffer) was pipetted in duplicate or triplicate into separate wells of a 96 well plate.

For each plate. Reaction mix was prepared by adding:

90μl of amplex Red reagent stock solution

60 μl of HRP stock solution

60 μl of cholesterol oxidase stock solution

6 μl of cholesterol esterase stock solution

to 5.784ml of 1 X reaction buffer.

50 μl of reaction mix was added to the wells containing controls and samples.

The plate was incubated for 30mins (or longer if necessary) at 37°C and the plate was protected from light.

Florescence was measured in a plate reader using excitation in the range of 560nm and emission was detected ar 590nm.

For each prepared HM sample, the florescence was corrected for background by subtracting the values derived from the no-cholesterol control.

Florescence was always measured after the same incubation time.

The results of the analysis of the HM, with respect to cholesterol concentration are shown in table II.

Table II

| | Cholesterol Concentration μg/100mL | | | |
|---|---|---|---|---|
| Stage | Min | Mean | Max | SD |
| 30days | 30.34 | 60.48 | 100.19 | 17.28 |
| 60 days | 14.47 | 47.16 | 113.58 | 21.08 |
| 120 days | 22.71 | 47.62 | 100.58 | 18.51 |

Statistical analysis:

The results of the compositional analysis were then subject to a statistical analysis employing the following linear mixed model:

$$Cholesterol = B_0 + B_1 timepoint + B_2 sex + B_3 timepoint*sex + \varepsilon$$

Where timepoint, sex and their interaction were considered as fixed effects of the model and takes into consideration the interactions between timepoint and sex. The prefixes $B_0$, $B_1$, $B_2$ and $B_3$ refer to regression coefficients corresponding to the different fixed variables which quantifies the impact of these variables on the cholesterol levels.

$\varepsilon$ refers to the random effect of the model which controls for within subject variability.

The results of the Statistical analysis (statistical inference) are show in in table III. The timeframe differences along with the corresponding Pvalues are shown.

Table III

| Timeframe | Variable | Contrast | SE | Lower | Upper | Pvalue |
|---|---|---|---|---|---|---|
| 1 month V's 2 months | Cholesterol | 13.397 | 3.226 | 7.015 | 19.779 | 0.00006 |
| 1 month V's 4 months | Cholesterol | 13.124 | 3.249 | 6.696 | 19.551 | 0.00009 |
| 2 months V's 4 months | Cholesterol | -0.273 | 3.270 | -6.744 | 6.197 | 0.93348 |

A P-value inferior to 0.1 for a particular timeframe suggests that there is a statistically significant difference in the cholesterol concentration of HM produced at the specific timeframes indicated. As can be seen from the results in table III, a statistically significant difference in the cholesterol content of HM produced at 0 up to 2 months (30days) postpartum and from 2 months postpartum (60 days and 120 days) was identified.

## Comparative Example 2

Examples of synthetic nutritional compositions (infant formulas) tailored to infants of specific ages are given in table IV

Table IV

| | Up to 2 weeks of age | Up to one month of age | 2 months of age |
|---|---|---|---|
| Ingredients | Per Litre | Per Litre | Per Litre |
| Energy (kcal) | 670 | 670 | 670 |
| Protein (g) | 12.1 | 12.1 | 12.1 |
| Fat (g) | 35.639 | 35.639 | 35.649 |
| Cholesterol (g) | 0.061 | 0.061 | 0.051 |
| Linoleic acid (g) | 5.3 | 5.3 | 5.3 |
| $\alpha$-Linolenic acid (mg) | 675 | 675 | 675 |
| Lactose (g) | 74.7 | 74.7 | 74.7 |
| Prebiotic (100% GOS) (g) | 4.3 | 4.3 | 4.3 |
| Minerals (g) | 2.5 | 2.5 | 2.5 |
| Na (mg) | 150 | 150 | 150 |
| K (mg) | 590 | 590 | 590 |
| Cl (mg) | 430 | 430 | 430 |
| Ca (mg) | 410 | 410 | 410 |
| P (mg) | 210 | 210 | 210 |

(continued)

| Ingredients | Up to 2 weeks of age Per Litre | Up to one month of age Per Litre | 2 months of age Per Litre |
|---|---|---|---|
| Mg (mg) | 50 | 50 | 50 |
| Mn (μg) | 50 | 50 | 50 |
| Se (μg) | 13 | 13 | 13 |
| Vitamin A (μg RE) | 700 | 700 | 700 |
| Vitamin D (μg) | 10 | 10 | 10 |
| Vitamin E (mg TE) | 5.4 | 5.4 | 5.4 |
| Vitamin K1 (μg) | 54 | 54 | 54 |
| Vitamin C (mg) | 67 | 67 | 67 |
| Vitamin B 1 (mg) | 0.47 | 0.47 | 0.47 |
| Vitamin B2 (mg) | 1 | 1 | 1 |
| Niacin (mg) | 6.7 | 6.7 | 6.7 |
| Vitamin B6 (mg) | 0.5 | 0.5 | 0.5 |
| Lactoferrin (bovine) g | 1 | 1 | 1 |
| Folic acid (μg) | 60 | 60 | 60 |
| Pantothenic acid (mg) | 3 | 3 | 3 |
| Vitamin B12 (μg) | 2 | 2 | 2 |
| Biotin (μg) | 15 | 15 | 15 |
| Choline (mg) | 67 | 67 | 67 |
| Fe (mg) | 8 | 8 | 8 |
| I (μg) | 100 | 100 | 100 |
| Cu (mg) | 0.4 | 0.4 | 0.4 |
| Zn (mg) | 5 | 5 | 5 |

Comparative example 3

An example of a nutritional system is given in table V.

Table V

| Ingredients | Up to one month of age Per Litre | 2 months of age Per Litre |
|---|---|---|
| Energy (kcal) | 670 | 670 |
| Protein (g) | 12.1 | 12.1 |
| Fat (g) | 35.639 | 35.649 |
| Cholesterol (g) | 0.061 | 0.051 |
| Linoleic acid (g) | 5.3 | 5.3 |
| α-Linolenic acid (mg) | 675 | 675 |
| Lactose (g) | 74.7 | 74.7 |
| Prebiotic (100% GOS) (g) | 4.3 | 4.3 |

(continued)

| | Up to one month of age | 2 months of age |
|---|---|---|
| Ingredients | Per Litre | Per Litre |
| Minerals (g) | 2.5 | 2.5 |
| Na (mg) | 150 | 150 |
| K (mg) | 590 | 590 |
| Cl (mg) | 430 | 430 |
| Ca (mg) | 410 | 410 |
| P (mg) | 210 | 210 |
| Mg (mg) | 50 | 50 |
| Mn ($\mu$g) | 50 | 50 |
| Se ($\mu$g) | 13 | 13 |
| Vitamin A ($\mu$g RE) | 700 | 700 |
| Vitamin D ($\mu$g) | 10 | 10 |
| Vitamin E (mg TE) | 5.4 | 5.4 |
| Vitamin K1 ($\mu$g) | 54 | 54 |
| Vitamin C (mg) | 67 | 67 |
| Vitamin B 1 (mg) | 0.47 | 0.47 |
| Vitamin B2 (mg) | 1 | 1 |
| Niacin (mg) | 6.7 | 6.7 |
| Vitamin B6 (mg) | 0.5 | 0.5 |
| Lactoferrin (bovine) g | 1 | 1 |
| Folic acid ($\mu$g) | 60 | 60 |
| Pantothenic acid (mg) | 3 | 3 |
| Vitamin B12 ($\mu$g) | 2 | 2 |
| Biotin ($\mu$g) | 15 | 15 |
| Choline (mg) | 67 | 67 |
| Fe (mg) | 8 | 8 |
| I ($\mu$g) | 100 | 100 |
| Cu (mg) | 0.4 | 0.4 |
| Zn (mg) | 5 | 5 |

**Claims**

1. A nutritional system comprising
   a synthetic nutritional composition tailored for an infant of up to 2 months of age wherein the cholesterol concentration is 30.34 to 100.19 $\mu$g/ml, and
   a synthetic nutritional composition tailored for an infant from 2 months of age wherein the cholesterol concentration is 14 to 114.26 $\mu$g/ml, wherein,
   the cholesterol concentration in said synthetic nutritional composition tailored for an infant of up to 2 months of age is higher than that of said synthetic nutritional composition tailored for an infant from 2 months of age, and wherein
   wherein the synthetic nutritional compositions tailored for an infant of up to 2 months of age comprises 12 to 47 µg/ml more cholesterol than the synthetic nutritional compositions tailored for an infant from 2 months of age, and wherein

a nutritional system is a collection of more than one synthetic nutritional composition

and wherein

the synthetic nutritional composition tailored for an infant of a specific age is infant formula.

**Patentansprüche**

1.  Nährstoffsystem, umfassend:

    eine synthetische Nährstoffzusammensetzung, die auf einen Säugling im Alter von bis zu 2 Monaten zugeschnitten ist

    wobei die Cholesterinkonzentration 30,34 bis 100,19 µg/ml beträgt, und

    eine synthetische Nährstoffzusammensetzung, die für einen Säugling im Alter von ab 2 Monaten zugeschnitten ist

    wobei die Cholesterinkonzentration 14 bis 114,26 µg/ml beträgt,

    wobei

    die Cholesterinkonzentration in der synthetischen Nährstoffzusammensetzung, die auf einen Säugling im Alter von bis zu 2 Monaten zugeschnitten ist, höher ist als die der synthetischen Nährstoffzusammensetzung, die auf einen Säugling im Alter von ab 2 Monaten zugeschnitten ist,

    und wobei

    wobei die synthetische Nährstoffzusammensetzungen, die für einen Säugling im Alter von bis zu 2 Monaten zugeschnitten ist, 12 bis 47 µg/ml mehr Cholesterin umfasst als die synthetische Nährstoffzusammensetzung, die für einen Säugling im Alter von ab 2 Monaten zugeschnitten ist,

    und wobei

    ein Nährstoffsystem eine Sammlung von mehr als einer synthetischen Nährstoffzusammensetzung ist

    und wobei

    die synthetische Nährstoffzusammensetzung, die auf einen Säugling eines bestimmten Alters zugeschnitten ist, Säuglingsanfangsnahrung ist.

**Revendications**

1.  Système nutritionnel comprenant

    une composition nutritionnelle synthétique adaptée pour un nourrisson jusqu'à l'âge de 2 mois

    dans lequel la concentration en cholestérol va de 30,34 à 100,19 µg/ml, et

    une composition nutritionnelle synthétique adaptée pour un nourrisson à partir de l'âge de 2 mois

    dans lequel la concentration en cholestérol va de 14 à 114,26 µg/ml,

    dans lequel,

    la concentration en cholestérol dans ladite composition nutritionnelle synthétique adaptée pour un nourrisson jusqu'à l'âge de 2 mois est supérieure à celle de ladite composition nutritionnelle synthétique adaptée pour un nourrisson à partir de l'âge de 2 mois,

    et dans lequel

    dans lequel les compositions nutritionnelles synthétiques adaptées pour un nourrisson jusqu'à l'âge de 2 mois comprend 12 à 47 µg/ml de cholestérol en plus que les compositions nutritionnelles synthétiques adaptées pour un nourrisson à partir de l'âge de 2 mois,

    et dans lequel

    un système nutritionnel est un ensemble de plus d'une composition nutritionnelle synthétique

    et dans lequel

    la composition nutritionnelle synthétique adaptée pour un nourrisson d'un âge spécifique est une préparation pour nourrissons.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013036102 A
- WO 2013153071 A
- US 2004265462 A
- WO 2011135564 A

- WO 2012069416 A
- WO 2006077259 A
- WO 2003059778 A

**Non-patent literature cited in the description**

- **WRODNIGG, T. M. ; STUTZ, A.E.** *Angew. Chem. Int. Ed.,* 1999, vol. 38, 827-828

- **OWEN.** *AM J ClinNutr,* 2008, 305-14
- **DEMMERS.** *Pediatrics,* 2005, 1594-601